# EUROPÄISCHE PATENTSCHRIFT

(11) **EP 2 327 545 B1**
(45) Veröffentlichungstag und Bekanntmachung des Hinweises auf die Patenterteilung: **04.05.2016**
(21) Anmeldenummer: 09014840.4
(22) Anmeldetag: 30.11.2009
(51) Int. Cl.: B32B 27/40

(54) **Verbundbauteil für Fahrzeuge sowie Verfahren zum Herstellen eines solchen Verbundbauteils**
Composite component for vehicles and method for manufacturing such a composite component
Composant composite pour véhicules ainsi que procédé de fabrication d'un tel composant composite

(43) Veröffentlichungstag der Anmeldung: 01.06.2011
(73) Patentinhaber: Roof Systems Germany GmbH, 63128 Dietzenbach (DE)
(72) Erfinder: Ludwig, Matthias, 38159 Vechelde (DE); Langhoff, Hans Joachim, 38518 Gifhorn (DE); Niesner, Tobias, 38542 Leiferde (DE); Beck, Herbert, 38302 Wolfenbüttel (DE)
(74) Vertreter: Prinz & Partner mbB

(56) Entgegenhaltungen:
- DE-A1- 19 531 586

## Beschreibung

Die Erfindung betrifft ein Verbundbauteil für Fahrzeuge, umfassend einen ersten Kunststoffkörper, der eine Außenseite mit einer Beschichtung und eine Verbundfläche mit einem Haftvermittler aufweist, sowie einen zweiten Kunststoffkörper, der durch den Haftvermittler mit dem ersten Kunststoffkörper verbunden ist. Darüber hinaus betrifft die Erfindung auch ein Verfahren zum Herstellen eines solchen Verbundbauteils.

Aus dem Stand der Technik sind bereits zahlreiche Kunststoff-Verbundbauteile für Fahrzeuge bekannt. Diese Verbundbauteile ersetzen aufgrund ihres geringeren Gewichts, der einfacheren Formgebung sowie der besseren Einstellbarkeit von Materialeigenschaften häufig herkömmliche Fahrzeug-Dachmodule oder Außenverkleidungen der Fahrzeugkarosserie, die aus Glas oder Metallblech hergestellt sind. Insbesondere bei transparenten Bauteilen kommen dabei als statisch tragende Kunststoffe oftmals Polycarbonat (PC), Polymethylmethacrylat (PMMA) oder Kombinationen davon zum Einsatz.

In der DE 10 2006 049 621 A1 ist zum Beispiel ein transparentes, mehrlagiges und flächiges Bauteil dargestellt, welches vorzugsweise als Scheibe in einem Fahrzeug verwendet wird. In einer der beschriebenen Ausführungsformen ist diese Scheibe dreilagig aufgebaut, aus einer unteren, statisch tragenden Lage aus Polycarbonat, einer oberen Lage aus einer Polymethylmethacrylat-Folie und einer dazwischenliegenden, dünnen Lage aus thermoplastischem Polyurethan (TPU) zur Verbindung der oberen und unteren Lage.

Die DE 195 31 586 A1 beschreibt einen Schichtstoff, ein Verfahren zu dessen Herstellung sowie dessen Verwendung, unter anderem für Fahrzeugkarosserien oder Anbauteile von Fahrzeugkarosserien. Der Schichtstoff besteht dabei aus einer Kunststofffolie (z.B. aus Polyurethan), einer Haftvermittlerschicht auf Basis von Polyurethan enthaltend ein oder mehrere Polyesterdiole mit einem Molekulargewicht von 500 bis 2500, gegebenenfalls einer weiteren Kunststofffolie gegebenenfalls einer weiteren Haftvermittlerschicht auf Basis von Polyurethan, gegebenenfalls einer Lackschicht, gegebenenfalls einer Füllerschicht und einer Trägermaterialschicht, vorzugsweise aus Kunststoff (z.B. aus Polyurethan), Holz oder Metall. Auf das Trägermaterial werden somit mehrere Beschichtungen aufgebracht, wobei die letzte und damit äußere Schicht eine Kunststofffolie ist. Die verwendeten Haftvermittler auf Polyurethan-Basis sorgen für den notwendigen Haftverbund zwischen zwei Schichten wie z.B. einem Trägermaterial aus Metall und einer Kunststofffolie aus Polyurethan.

Aufgabe der Erfindung ist die Schaffung eines Kunststoff-Verbundbauteils für Fahrzeuge, welches die hohen Qualitätsanforderungen der Fahrzeughersteller an die Oberfläche der Fahrzeugaußenhaut erfüllt, einfach aufgebaut ist und fertigungstechnisch mit geringem Aufwand herstellbar ist.

Erfindungsgemäß wird diese Aufgabe gelöst durch ein Verbundbauteil der eingangs genannten Art, bei dem die außenseitige Beschichtung mit dem Haftvermittler identisch ist. Infolge der Verwendung desselben Materials als außenseitige Beschichtung und zugleich als Haftvermittler vereinfacht sich der Aufbau des Verbundbauteils sowie dessen Herstellungsverfahren deutlich.

Ferner weist die außenseitige Beschichtung gegenüber Metallen auch Trennmitteleigenschaften auf, sodass auf ein zusätzliches, separates Trennmittel, welches das Lösen der Kunststoffkörper bzw. des Verbundbauteils aus den in der Regel metallenen Formwerkzeugen erleichtert. Das verwendete Beschichtungsmaterial wirkt folglich zwischen den beiden Kunststoffkörpern als Kleber sowie zwischen Kunststoffkörper und metallenem Formwerkzeug als Trennmittel. Dadurch verringert sich die Anzahl der unterschiedlichen, zum Herstellen des Verbundbauteils notwendigen Materialien, was sowohl zu einer Senkung der Lagerhaltungskosten als auch zu einer weiteren Vereinfachung des Herstellungsverfahrens führt.

Der erste Kunststoffkörper und/oder der zweite Kunststoffkörper sind in einer bevorzugten Ausführungsform aus Polyurethan hergestellt.

In diesem Fall kann die Beschichtung bzw. der Haftvermittler ein Lack, insbesondere ein Polyurethanlack sein. Die Materialkombination aus einem ersten Polyurethankörper, einem zweiten Polyurethankörper und einem Polyurethanlack hat sich dahin gehend als vorteilhaft erwiesen, als der Polyurethanlack zwischen den Polyurethankörpern hervorragende Haftmitteleigenschaften sowie zwischen den Polyurethankörpern und den metallenen Formwerkzeugen gute Trennmitteleigenschaften aufweist, sodass auf ein zusätzliches, separates Trennmittel verzichtet werden kann. Darüber hinaus weist der Polyurethanlack bei geeigneter Zusammensetzung eine hohe Kratzfestigkeit auf, wodurch eine wichtige Anforderung an eine spätere Fahrzeugaußenhaut erfüllt wird.

In einer weiteren Ausführungsform des Verbundbauteils hat der erste Kunststoffkörper senkrecht zur Außenseite gesehen eine im Wesentlichen konstante Dicke, die vorzugsweise in der Größenordnung weniger Millimeter liegt und zu einer herausragenden Oberflächenqualität des Verbundbauteils beiträgt. Infolge einer konstanten Dicke werden nämlich Einfallstellen oder Unebenheiten durch unterschiedliche Materialschrumpfung vermieden, sodass sich eine besonders gleichmäßige, optisch einwandfreie Oberfläche ergibt, welche mit der Beschichtung bzw. dem Haftvermittler versehen ist.

Der zweite Kunststoffkörper bildet bevorzugt ein mechanisch stabiles Tragelement.

Dabei ist vorzugsweise mindestens ein Anbauteil und/oder Einbauteil vorgesehen, welches wenigstens teilweise im zweiten Kunststoffkörper aufgenommen ist. Infolge des auf die Optimierung der Oberflächeneigenschaften ausgelegten, ersten Kunststoffkörpers kann die Oberflächenbeschaffenheit des zweiten Kunststoffkörpers eher vernachlässigt und der Fokus auf eine hohen Tragfähigkeit gerichtet werden. Insbesondere ist auch eine faserverstärkte Ausführung des zweiten Kunststoffkörpers (z.B. Glasfaser- oder Kohlefaserverstärkung) denkbar. Diese Faserverstärkung wirkt sich in der Regel zwar negativ auf die Optik und Oberflächenqualität des zweiten Kunststoffkörpers aus, führt aber genau wie Anbau- oder Einbauteile zu deutlichen Vorteilen in Bezug auf Stabilität, Tragfähigkeit und Montage.

In einer weiteren Ausführungsform des Verbundbauteils erstreckt sich der Haftvermittler im Wesentlichen vollflächig zwischen einander zugewandten Verbundflächen der beiden Kunststoffkörper.

Dabei ist der erste Kunststoffkörper besonders bevorzugt im Wesentlichen vollständig mit der Beschichtung bzw. dem Haftvermittler überzogen. Durch die, im Wesentlichen vollflächige Verklebung der beiden Kunststoffkörper entsteht ein besonders starker Haftverbund. Im Übrigen führt die im Wesentlichen vollständige Beschichtung des ersten Kunststoffkörpers bei ausreichenden Trennmitteleigenschaften des Beschichtungsmaterials zu dem vorteilhaften Effekt, dass keine weiteren Trennmittel benötigt werden.

Das Verbundbauteil kann insbesondere ein Fahrzeug-Dachmodul sein, wobei die Beschichtung im eingebauten Zustand des Fahrzeug-Dachmoduls bevorzugt wenigstens abschnittsweise eine sichtbare Fahrzeug-Außenhaut bildet.

Die gestellte Aufgabe wird im Übrigen auch gelöst durch ein Verfahren zum Herstellen eines Verbundbauteils für Fahrzeuge mit folgenden Schritten:
a) es werden relativ zueinander bewegbare Formwerkzeuge bereitgestellt, die einen ersten Formhohlraum definieren können;
b) auf eine Oberfläche der Formwerkzeuge wird eine Beschichtung aufgebracht;
c) es wird ein Kunststoffmaterial eingebracht, welches in den Formwerkzeugen zum ersten Kunststoffkörper aushärtet und mit der Beschichtung eine Haftverbindung eingeht;
d) es werden relativ zueinander bewegbare Formwerkzeuge bereitgestellt, die zusammen mit dem ersten Kunststoffkörper einen zweiten Formhohlraum definieren können;
e) auf eine Oberfläche wenigstens eines der Formwerkzeuge wird ein Überzug aufgebracht;
f) es wird ein Kunststoffmaterial eingebracht, welches an die Oberfläche des mit dem Überzug versehenen Formwerkzeugs und eine beschichtete Verbundfläche des ersten Kunststoffkörpers angrenzt, in den Formwerkzeugen zum zweiten Kunststoffkörper aushärtet und mit der Beschichtung des ersten Kunststoffkörpers eine Haftverbindung eingeht;
g) die Formwerkzeuge werden relativ zueinander bewegt, bis das Verbundbauteil entnommen werden kann, wobei die Beschichtung ein Trennmittel ist, welches ein Lösen des ersten Kunststoffkörpers aus den metallenen Formwerkzeugen erleichtert.

Bei diesem Verfahren erfüllt die Beschichtung, welche im Verfahrensschritt b) auf eine Oberfläche der Formwerkzeuge aufgebracht wird, mehrere Funktionen. Zum einen geht sie in Schritt c) eine Haftverbindung mit dem ersten Kunststoffkörper ein und bildet zumindest abschnittsweise eine Außenhaut, welche die Oberflächeneigenschaften des Verbundbauteils wie z.B. Witterungsbeständigkeit, Schlagzähigkeit, Kratzfestigkeit, Farbechtheit, etc. maßgeblich beeinflusst. Zum andern geht die Beschichtung im Schritt f) auch eine Haftverbindung mit dem zweiten Kunststoffkörper ein und bildet somit eine Art Kleber oder Haftvermittler zwischen den beiden Kunststoffkörpern.

Dabei ist die Beschichtung zugleich ein Trennmittel, welches ein Lösen des ersten Kunststoffkörpers aus den metallenen Formwerkzeugen erleichtert. Somit fungiert die Beschichtung als Kleber zwischen den Kunststoffkörpern, als Trennmittel zu den metallenen Formwerkzeugen und schließlich als Oberflächenbeschichtung, die sich als sichtbare Fahrzeug-Außenhaut eignet.

Der Überzug, welcher im Schritt e) auf eine Oberfläche wenigstens eines der Formwerkzeuge aufgebracht wird, kann ein Trennmittel sein, welches im Schritt g) ein Lösen des zweiten Kunststoffkörpers aus dem wenigstens einen mit dem Überzug versehenen, metallenen Formwerkzeug erleichtert.

In einer Verfahrensvariante können dabei die Beschichtung und der Überzug identisch sein, sodass während des Herstellungsverfahrens lediglich ein Beschichtungsmaterial benötigt wird, welches alle Anforderungen an eine sichtbare Außenhaut, einen Haftvermittler und ein Trennmittel erfüllt.

In einer weiteren Verfahrensvariante ist wenigstens ein Formwerkzeug vorgesehen, welches zunächst im Schritt c) zumindest teilweise den ersten Formhohlraum begrenzt sowie danach im Schritt f) zumindest teilweise den zweiten Formhohlraum begrenzt und/oder den ersten Kunststoffkörper fixiert. Somit ist wenigstens ein Formwerkzeug sowohl am Spritzen des ersten Kunststoffkörpers als auch am Spritzen des zweiten Kunststoffkörpers beteiligt, was zum einen verfahrenstechnische Vorteile bietet und zum anderen die Anzahl der notwendigen Formwerkzeuge zur Herstellung des Verbundbauteils minimiert.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 die Schritte a) und b) eines erfindungsgemäßen Verfahrens zum Herstellen eines erfindungsgemäßen Verbundbauteils für Fahrzeuge;
- Figur 2 die Schritte c) bis e) des erfindungsgemäßen Verfahrens;
- Figuren 3 und 4 den Schritt f) des erfindungsgemäßen Verfahrens;
- Figur 5 den Schritt g) des erfindungsgemäßen Verfahrens sowie ein erfindungsgemäßes Verbundbauteil; und
- Figur 6 einen schematischen Detailschnitt durch das erfindungsgemäße Verbundbauteil gemäß Figur 5.

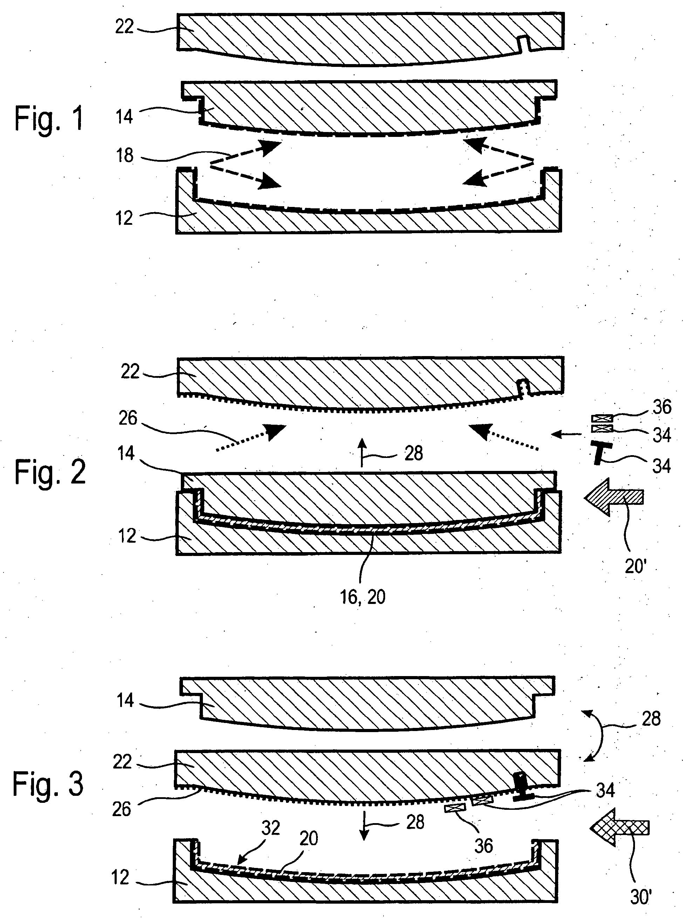

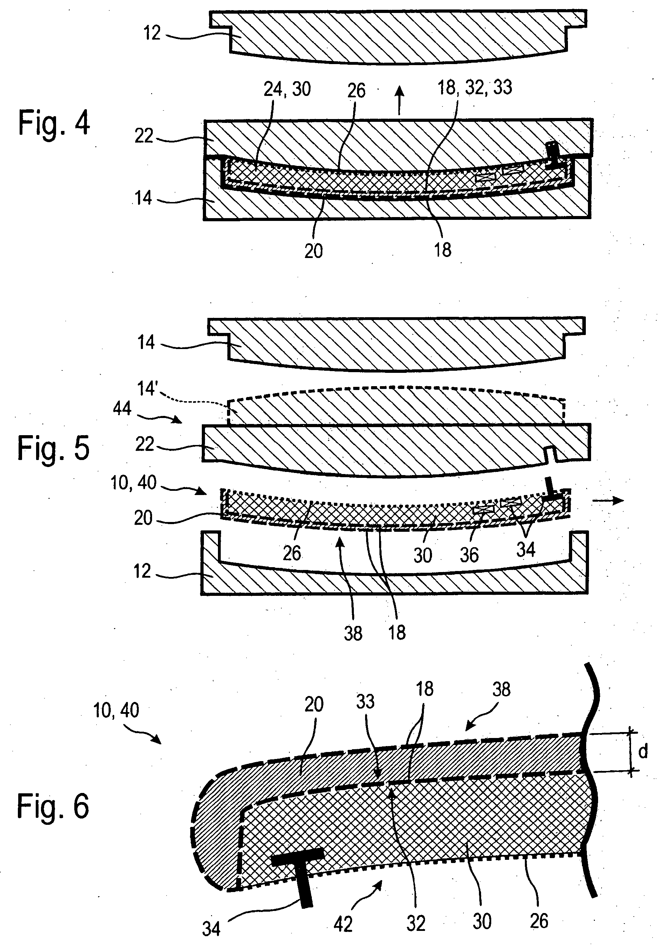

Die Figuren 1 bis 5 zeigen schematisch den Ablauf eines Verfahrens zum Herstellen eines Verbundbauteils 10 für Fahrzeuge, welches in den Figuren 5 und 6 dargestellt ist.

Gemäß Figur 1 werden relativ zueinander bewegbare Formwerkzeuge 12, 14 bereitgestellt, die einen ersten Formhohlraum 16 (vgl. Figur 2) definieren können, wobei auf eine Oberfläche der Formwerkzeuge 12, 14 eine Beschichtung 18 aufgebracht wird. Im vorliegenden Fall umfassen die Formwerkzeuge 12, 14 ein erstes Formwerkzeug 12 aus Metall, und ein zweites Formwerkzeug 14 aus Metall. Die Beschichtung 18 wird auf alle Oberflächen des ersten Formwerkzeugs 12 und des zweiten Formwerkzeugs 14 aufgetragen, welche im Folgenden den ersten Formhohlraum 16 begrenzen.

Nachdem in das erste Formwerkzeug 12 ein Kunststoffmaterial 20' eingebracht wurde, werden das erste Formwerkzeug 12 und das zweite Formwerkzeug 14 relativ zueinander so bewegt, dass sie gemäß Figur 2 den ersten Formhohlraum 16 einschließen, welcher im Wesentlichen der Form eines ersten Kunststoffkörpers 20 entspricht. In einer alternativen Verfahrensvariante können auch zunächst die Formwerkzeuge 12, 14 relativ zueinander bewegt und das Kunststoffmaterial 20' erst danach in den bereits geschlossenen ersten Formhohlraum 16 eingefüllt werden.

In wenigstens einem Formwerkzeug 12, 14 ist vorzugsweise ein (nicht gezeigter) Überlaufkanal ausgebildet, durch den überschüssiges Kunststoffmaterial 20' aus dem ersten Formhohlraum 16 austreten kann. Das Kunststoffmaterial 20' im ersten Formhohlraum 16 härtet in den Formwerkzeugen 12, 14 zum ersten Kunststoffkörper 20 aus und geht mit der Beschichtung 18 eine Haftverbindung ein.

Als Kunststoffmaterial 20' wird im dargestellten Ausführungsbeispiel ein Polyurethan verwendet, sodass der erste Kunststoffkörper 20 ein Polyurethankörper ist. Als Polyurethanmaterial wird dabei eine unter hohem Druck hergestellte Mischung der Polyurethan-Ausgangskomponenten Polyol und Isocyanat bezeichnet. Vorzugsweise kommt ein lichtechtes, zähhartes 2-Komponenten-Polyurethansystem zum Einsatz, welches zur Herstellung von Formteilen geeignet ist. Eine erste Ausgangskomponente ist beispielsweise ein Gemisch aus Polyolen, Aktivatoren und oberflächenaktiven Substanzen, während die zweite Ausgangskomponente zum Beispiel ein aliphatisches, polyfunktionales Isocyanat ist.

Als Beschichtung 18 wird bevorzugt ein Lack, beispielsweise ein Polyurethanlack verwendet, der mit dem Kunststoffmaterial 20' eine starke Haftverbindung eingeht. Die Haftverbindung zwischen der Beschichtung 18 und dem Kunststoffmaterial 20' ist dabei um ein Vielfaches höher als die Haftverbindung zwischen der Beschichtung 18 und der Oberfläche der metallenen Formwerkzeuge 12, 14.

Die Haftverbindung zwischen der Beschichtung 18 und den Formwerkzeugen 12, 14 ist im Idealfall gerade so stark, dass die Beschichtung 18 beim Einbringen des flüssigen Kunststoffmaterials 20' an den Oberflächen der Formwerkzeuge 12, 14 fixiert bleibt und sich nicht ablöst. Beispielsweise kann das Ausgangsmaterial für die Beschichtung 18 ein 2-Komponenten-Polyurethansystem sein, welches speziell für die Anwendung als "In-Mold-Coating" entwickelt wurde und sich durch eine hohe mechanische Belastbarkeit, Flexibilität und chemische Beständigkeit auszeichnet. Besonders bevorzugt weist dieser 2-Komponenten-Polyurethanlack gegenüber Metallen Trennmitteleigenschaften auf, sodass ohne den Einsatz eines separaten Trennmittels, welches in einem zusätzlichen Verfahrensschritt aufgebracht werden müsste, ein problemloses Lösen aus den metallenen Formwerkzeugen 12, 14 möglich ist.

Da im Verfahrensschritt b) alle den ersten Formhohlraum 16 begrenzenden Oberflächen der Formwerkzeuge 12, 14 mit der Beschichtung 18 versehen wurden, ist der erste Kunststoffkörper 20 ein Zwischenprodukt des Verfahrens, welches im Wesentlichen vollständig mit der Beschichtung 18 überzogen ist.

Gemäß Figur 3 werden relativ zueinander bewegbare Formwerkzeuge 12, 22 bereitgestellt, die zusammen mit dem ersten Kunststoffkörper 20 einen zweiten Formhohlraum 24 definieren können, wobei auf eine Oberfläche wenigstens eines der Formwerkzeuge 12, 22 ein Überzug 26 aufgebracht wird. Die zur Bildung des zweiten Formhohlraums 24 verwendeten Formwerkzeuge 12, 22 sind dabei das erste Formwerkzeug 12 und ein drittes Formwerkzeug 22 aus Metall, wobei im vorliegenden Ausführungsbeispiel lediglich eine den zweiten Formhohlraum 24 begrenzende Oberfläche des dritten Formwerkzeugs 22 mit dem Überzug 26 versehen wird.

Das erste Formwerkzeug 12 begrenzt somit zum einen in Figur 2 teilweise den ersten Formhohlraum 16 und fixiert zum andern in den Figuren 3 und 4 den ersten Kunststoffkörper 20. Alternativ oder zusätzlich könnte das erste Formwerkzeug 12 in den Figuren 3 und 4 auch zumindest teilweise den zweiten Formhohlraum 24 begrenzen. Jedenfalls ist das erste Formwerkzeug 12 sowohl an der Bildung des ersten Formhohlraums 16 als auch an der Bildung des zweiten Formhohlraums 24 beteiligt. Wie in den Figuren zu sehen, können das zweite Formwerkzeug 14 und das dritte Formwerkzeug 22 hierzu ihre Positionen tauschen und wechselweise mit dem ersten Formwerkzeug 12 zusammenwirken. Dieser Vorgang ist in den Figuren 2 und 3 durch Pfeile 28 angedeutet.

In einer besonders bevorzugten, alternativen Verfahrensvariante können das zweite Formwerkzeug 14 und das dritte Formwerkzeug 22 durch ein einziges kombiniertes Formwerkzeug 44 ersetzt werden. Dies ist in Figur 4 durch einen gestrichelt dargestellten Formabschnitt 14' des zweiten Formwerkzeugs 14 angedeutet, welcher einstückig in das dritte Formwerkzeug 22 integriert ist. Damit dem ersten Formwerkzeug 12 im Laufe des Verfahrens die jeweils gewünschte Oberflächenform des kombinierten Formwerkzeugs 44 zugewandt ist, weist das kombinierte Formwerkzeug 44 in diesem Fall eine drehbare Lagerung auf. Wie in den anderen Verfahrensvarianten ist darüber hinaus auch wenigstens ein Formwerkzeug 12, 14, 22, 44 translatorisch (gemäß den Figuren 1 bis 5 vertikal) bewegbar, so dass die Formhohlräume 16, 24 geöffnet und geschlossen werden können.

Nachdem in das erste Formwerkzeug 12 ein Kunststoffmaterial 30' eingebracht wurde, werden das erste Formwerkzeug 12 und das dritte Formwerkzeug 22 relativ zueinander so bewegt, dass sie gemäß Figur 4 den ersten Kunststoffkörper 20 und den zweiten Formhohlraum 24 einschließen, wobei der zweite Formhohlraum 24 im Wesentlichen der Form eines zweiten Kunststoffkörpers 30 entspricht und wenigstens abschnittsweise durch die Oberfläche des mit dem Überzug 26 versehenen dritten Formwerkzeugs 22 sowie eine mit der Beschichtung 18 versehene Verbundfläche 32 des ersten Kunststoffkörpers 20 begrenzt wird. Analog zur oben erwähnten, alternativen Verfahrerisvariante beim Einbringen des ersten Kunststoffmaterials 20' können auch hier zunächst die Formwerkzeuge 12, 22 relativ zueinander bewegt und erst danach das Kunststoffmaterial 30' in den bereits geschlossenen zweiten Formhohlraum 24 eingefüllt werden.

In wenigstens einem Formwerkzeug 12, 22 ist vorzugsweise ein (nicht gezeigter) Überlaufkanal ausgebildet, durch den überschüssiges Kunststoffmaterial 30' aus dem zweiten Formhohlraum 24 austreten kann. Das übrige Kunststoffmaterial 30' im zweiten Formhohlraum 24 härtet in den Formwerkzeugen 14, 22 zum zweiten Kunststoffkörper 30 aus und geht mit der Beschichtung 18 des ersten Kunststoffkörpers 20 eine Haftverbindung ein. Die Beschichtung 18 wirkt also zwischen einander zugewandten Verbundflächen 32, 33 des ersten Kunststoffkörpers 20 und des zweiten Kunststoffkörpers 30 als Haftvermittler.

Auch als Kunststoffmaterial 30' wird im vorliegenden Ausführungsbeispiel ein Polyurethan verwendet, sodass der zweite Kunststoffkörper 30 genau wie der erste Kunststoffkörper 20 ein Polyurethankörper ist. Bezüglich der Materialzusammensetzung wird auf die obige Beschreibung des Kunststoffmaterials 20' verwiesen, wobei zu betonen ist, dass für den ersten Kunststoffkörper 20 und für den zweiten Kunststoffkörper 30 in der Regel unterschiedliche Polyurethane verwendet werden. Während das Polyurethanmaterial des ersten Kunststoffkörpers 20 hauptsächlich eine gewünschte Oberflächenqualität des späteren Verbundbauteils 10 sicherstellen soll, muss der zweite Kunststoffkörper 30 aus Polyurethanmaterial ein mechanisch stabiles Tragelement bilden. Hierzu kann das Polyurethanmaterial des zweiten Kunststoffkörpers 30 beispielsweise eine Faserverstärkung aufweisen, welche sich zwar vorteilhaft auf das Tragverhalten, gleichzeitig aber nachteilig hinsichtlich einer gleichmäßigen Oberflächenoptik auswirkt.

Des Weiteren können Anbauteile 34 oder Einbauteile 36 vorgesehen sein, welche wenigstens teilweise im zweiten Kunststoffkörper 30 aufgenommen sind (vgl. Figuren 3 bis 5). Einbauteile 36 sind beispielsweise Solarzellen oder statische Verstärkungselemente wie Stahlblechstreifen. Die Einbauteile 36 werden beim Einbringen in die Formwerkzeuge 12, 22 so im zweiten Formhohlraum 24 positioniert, dass sie beim Einspritzen des Kunststoffmaterials 30' im Wesentlichen vollständig vom Kunststoffmaterial 30' umschlossen werden und später geschützt im Innern des zweiten Kunststoffkörpers 30 liegen.

Demgegenüber sind Anbauteile 34 in einer randseitigen Vertiefung des zweiten Kunststoffkörpers 30 aufgenommen und mit dem zweiten Kunststoffkörper 30 fest verbunden. Ein solches Anbauteil 34 kann dabei entweder im Wesentlichen bündig mit einer Oberfläche des zweiten Kunststoffkörpers 30 abschließen (z.B. Solarzellen) oder sich aus dem zweiten Kunststoffkörper 30 hinaus erstrecken (z.B. Montageelemente, Stahlprofile etc.).

Schließlich werden die Formwerkzeuge 12, 14, 22 in einem letzten Verfahrensschritt gemäß Figur 5 relativ zueinander so bewegt, dass das fertige Verbundbauteil 10 entnommen werden kann.

Der in Figur 2 aufgebrachte Überzug 26 ist ein Trennmittel, welches bei der Entnahme des Verbundbauteils 10 ein Lösen des zweiten Kunststoffkörpers 30 aus dem mit dem Überzug 26 versehenen dritten Formwerkzeug 22 erleichtert.

In einer besonderen Verfahrensvariante kann auf dieses zusätzliche Trennmittel verzichtet werden, wenn die Beschichtung 18 als Überzug 26 verwendet wird, das heißt wenn die Beschichtung 18 mit dem Überzug 26 identisch ist.

Es ist klar, dass sich die Reihenfolge der angegebenen Verfahrensschritte zum Teil problemlos an vorgegebene Randbedingungen anpassen lässt. So kann der Überzug 26 in der dargestellten Verfahrensvariante beispielsweise gleich zu Beginn des Verfahrens oder zu einem beliebigen anderen Zeitpunkt vor dem Einbringen des Kunststoffmaterials 30' auf das dritte Formwerkzeug 22 aufgetragen werden.

Das in dem zuvor beschriebenen Verfahren hergestellte Verbundbauteil 10 für Fahrzeuge kann in Figur 5 entnommen werden.

Um den Aufbau besser erkennen zu können, zeigt die Figur 6 einen Detailschnitt des Verbundbauteils 10, umfassend den ersten Kunststoffkörper 20, der eine Außenseite 38 mit der Beschichtung 18 und die Verbundfläche 32 mit einem Haftvermittler aufweist, sowie den zweiten Kunststoffkörper 30, der durch den Haftvermittler mit dem ersten Kunststoffkörper 20 verbunden ist, wobei die außenseitige Beschichtung 18 mit dem Haftvermittler identisch ist. Die Verbundfläche 32 des ersten Kunststoffkörpers 20 liegt der Außenseite 38 gegenüber und grenzt an die Verbundfläche 33 des zweiten Kunststoffkörpers 30 an.

Da die Beschichtung 18 bzw. der Haftvermittler im vorliegenden Fall auch als Trennmittel zwischen den Formwerkzeugen 12, 14 wirkt, erstreckt sich der Haftvermittler im Wesentlichen vollflächig zwischen den einander zugewandten Verbundflächen 32, 33 der beiden Kunststoffkörper 20, 30. Des Weiteren ist der erste Kunststoffkörper 20 im Wesentlichen vollständig mit der Beschichtung 18 bzw. dem Haftvermittler überzogen.

Im übrigen weist der erste Kunststoffkörper 20 senkrecht zur Außenseite 38 gesehen eine im Wesentlichen konstante Dicke d auf, wie in den Figuren 5 und 6 zu sehen ist. Dadurch werden unerwünschte Unebenheiten beim Aushärten des ersten Kunststoffkörpers 20 (sogenannte Einfallstellen) vermieden, weshalb die mit der Beschichtung 18 versehene Außenseite 38 eine äußerst glatte, hochqualitative Oberfläche, beispielsweise eine sogenannte "Class A"-Oberfläche aufweist.

Das Verbundbauteil 10 ist insbesondere ein flächiges Verbundbauteil für Fahrzeuge, mit einem flächigen ersten Kunststoffkörper 20 und einem flächigen zweiten Kunststoffkörper 30. Derartige Verbundbauteile 10 werden häufig als flächige Außenverkleidung der Fahrzeugkarosserie oder als Fahrzeug-Dachmodul 40 eingesetzt.

Im eingebauten Zustand der Fahrzeug-Außenverkleidung bzw. des Fahrzeug-Dachmoduls 40 bildet die Beschichtung 18 auf der Außenseite 38 des ersten Kunststoffkörpers 20 wenigstens abschnittsweise eine sichtbare Fahrzeug-Außenhaut. Die Beschichtung 18 ist hierbei vorzugsweise als Kratzfest-Beschichtung ausgebildet, die ferner alle wichtigen Anforderungen z.B. bezüglich Witterungsbeständigkeit und Lichtechtheit erfüllt.

Die beschriebenen Verbundbauteile 10 können entweder als nicht-transparente Karosserie-Verkleidungsteile bzw. Dachmodule oder aber auch als transparente Dachmodule ausgebildet werden.

Der in Figur 6 punktiert angedeutete Überzug 26 symbolisiert Trennmittelrückstände des in Figur 2 auf das dritte Formwerkzeug 22 aufgebrachten Trennmittels. In einer (nicht dargestellten) Ausführungsvariante sind der Überzug 26 und die Beschichtung 18 identisch, sodass auch eine Innenseite 42, das heißt eine im eingebauten Zustand dem Fahrzeuginnenraum zugewandte Seite des Dachmoduls 40, mit der Beschichtung 18 versehen ist.

## Patentansprüche

1. Verbundbauteil für Fahrzeuge, umfassend
einen ersten Kunststoffkörper (20), der eine Außenseite (38) mit einer Beschichtung (18) und eine Verbundfläche (32) mit einem Haftvermittler aufweist, sowie
einen zweiten Kunststoffkörper (30), der durch den Haftvermittler mit dem ersten Kunststoffkörper (20) verbunden ist,
**dadurch gekennzeichnet, dass** die außenseitige Beschichtung (18) mit dem Haftvermittler identisch ist und gegenüber Metallen Trennmitteleigenschaften aufweist.

2. Verbundbauteil nach Anspruch 1, **dadurch gekennzeichnet, dass** der erste Kunststoffkörper (20) und/oder der zweite Kunststoffkörper (30) aus einem Polyurethan hergestellt sind.

3. Verbundbauteil nach einem der vorhergehenden Ansprüche, **dadurch gekennzeichnet, dass** der erste Kunststoffkörper (20) senkrecht zur Außenseite (38) gesehen eine im Wesentlichen konstante Dicke (d) aufweist.

4. Verbundbauteil nach einem der vorhergehenden Ansprüche, **dadurch gekennzeichnet, dass** der zweite Kunststoffkörper (30) ein mechanisch stabiles Tragelement bildet.

5. Verbundbauteil nach einem der vorhergehenden Ansprüche, **dadurch gekennzeichnet, dass** wenigstens ein Anbauteil (34) und/oder Einbauteil (36) vorgesehen ist, welches wenigstens teilweise im zweiten Kunststoffkörper (30) aufgenommen ist.

6. Verbundbauteil nach einem der vorhergehenden Ansprüche, **dadurch gekennzeichnet, dass** sich der Haftvermittler im Wesentlichen vollflächig zwischen einander zugewandten Verbundflächen (32, 33) der beiden Kunststoffkörper (20, 30) erstreckt.

7. Verbundbauteil nach einem der vorhergehenden Ansprüche, **dadurch gekennzeichnet, dass** der erste Kunststoffkörper (20) im Wesentlichen vollständig mit der Beschichtung (18) bzw. dem Haftvermittler überzogen ist.

8. Verbundbauteil nach einem der vorhergehenden Ansprüche, **dadurch gekennzeichnet, dass** die Beschichtung (18) bzw. der Haftvermittler ein Lack, insbesondere ein Polyurethanlack ist.

9. Verbundbauteil nach einem der vorhergehenden Ansprüche, **dadurch gekennzeichnet, dass** das Verbundbauteil (10) ein Fahrzeug-Dachmodul (40) ist.

10. Verbundbauteil nach Anspruch 9, **dadurch gekennzeichnet, dass** die Beschichtung (18) im eingebauten Zustand des Fahrzeug-Dachmoduls (40) wenigstens abschnittsweise eine sichtbare Fahrzeug-Außenhaut bildet.

11. Verfahren zum Herstellen eines Verbundbauteils (10) für Fahrzeuge mit folgenden Schritten:
a) es werden relativ zueinander bewegbare Formwerkzeuge (12, 14) bereitgestellt, die einen ersten Formhohlraum (16) definieren können;
b) auf eine Oberfläche der Formwerkzeuge (12, 14) wird eine Beschichtung (18) aufgebracht;
c) es wird ein Kunststoffmaterial (20') eingebracht, welches in den Formwerkzeugen (12, 14) zum ersten Kunststoffkörper (20) aushärtet und mit der Beschichtung (18) eine Haftverbindung eingeht;
d) es werden relativ zueinander bewegbare Formwerkzeuge (12, 22) bereitgestellt, die zusammen mit dem ersten Kunststoffkörper (20) einen zweiten Formhohlraum (24) definieren können;
e) auf eine Oberfläche wenigstens eines der Formwerkzeuge (12, 22) wird ein Überzug (26) aufgebracht;
f) es wird ein Kunststoffmaterial (30') eingebracht, welches an die Oberfläche des mit dem Überzug (26) versehenen Formwerkzeuges (12, 22) und eine beschichtete Verbundfläche (32) des ersten Kunststoffkörpers (20) angrenzt, in den Formwerkzeugen (12, 22) zum zweiten Kunststoffkörper (30) aushärtet und mit der Beschichtung (18) des ersten Kunststoffkörpers (20) eine Haftverbindung eingeht;
g) die Formwerkzeuge (12, 22) werden relativ zueinander bewegt, bis das Verbundbauteil (10) entnommen werden kann, wobei die Beschichtung (18) ein Trennmittel ist, welches ein Lösen des ersten Kunststoffkörpers (20) aus den metallenen Formwerkzeugen (12, 14, 22) erleichtert.

12. Verfahren nach Anspruch 11, **dadurch gekennzeichnet, dass** das Kunststoffmaterial (20') im Schritt d) zur Bildung des ersten Kunststoffkörpers (20) und/oder das Kunststoffmaterial (30') im Schritt h) zur Bildung des zweiten Kunststoffkörpers (30) ein Polyurethan ist.

13. Verfahren nach Anspruch 11 oder 12, **dadurch gekennzeichnet, dass** die Beschichtung (18) im Schritt b) ein Lack, insbesondere ein Polyurethanlack ist.

14. Verfahren nach einem der Ansprüche 11 bis 14, **dadurch gekennzeichnet, dass** der Überzug (26) ein Trennmittel ist, welches im Schritt g) ein Lösen des zweiten Kunststoffkörpers (30) aus dem wenigstens einen mit dem Überzug (26) versehenen, metallenen Formwerkzeug (12, 22) erleichtert.

15. Verfahren nach einem der Ansprüche 11 bis 15, **dadurch gekennzeichnet, dass** die Beschichtung (18) mit dem Überzug (26) identisch ist.

16. Verfahren nach einem der Ansprüche 11 bis 16, **dadurch gekennzeichnet, dass** wenigstens ein Formwerkzeug (12) vorgesehen ist, welches zum einen im Schritt c) zumindest teilweise den ersten Formhohlraum (16) begrenzt sowie zum anderen im Schritt f) zumindest teilweise den zweiten Formhohlraum (24) begrenzt und/oder den ersten Kunststoffkörper (20) fixiert.

17. Verfahren nach einem der Ansprüche 11 bis 17, **dadurch gekennzeichnet, dass** die Formwerkzeuge (12, 14) vor oder nach dem Einbringen des Kunststoffmaterials (20') im Schritt c) relativ zueinander bewegt werden, bis sie den ersten Formhohlraum (16) einschließen, welcher im Wesentlichen der Form des ersten Kunststoffkörpers (20) entspricht.

18. Verfahren nach einem der Ansprüche 11 bis 18, **dadurch gekennzeichnet, dass** die Formwerkzeuge (12, 22) vor oder nach dem Einbringen des Kunststoffmaterials (30') im Schritt f) relativ zueinander bewegt werden, bis sie den ersten Kunststoffkörper (20) und den zweiten Formhohlraum (24) einschließen, welcher im Wesentlichen der Form des zweiten Kunststoffkörpers (30) entspricht und wenigstens abschnittsweise durch die Oberfläche des mit dem Überzug (26) versehenen Formwerkzeugs (12, 22) und eine beschichtete Verbundfläche (32) des ersten Kunststoffkörpers (20) begrenzt wird.

## Claims

1. A composite component for vehicles, comprising
a first plastic body (20) which has an outer face (38) with a coating (18) and a bonding surface (32) with an adhesive agent, and
a second plastic body (30) which is connected with the first plastic body (20) by the adhesive agent,
**characterized in that** the coating (18) on the outer face is identical to the adhesive agent and has release agent properties with respect to metals.

2. The composite component according to claim 1, **characterized in that** the first plastic body (20) and/or the second plastic body (30) is/are produced from a polyurethane.

3. The composite component according to either of the preceding claims, **characterized in that**, as viewed perpendicularly to the outer face (38), the first plastic body (20) has a substantially constant thickness (d).

4. The composite component according to any of the preceding claims, **characterized in that** the second plastic body (30) forms a mechanically stable supporting member.

5. The composite component according to any of the preceding claims, **characterized in that** at least one add-on part (34) and/or mounting part (36) is provided which is at least partly received within the second plastic body (30).

6. The composite component according to any of the preceding claims, **characterized in that** the adhesive agent extends substantially over the entire surface between bonding surfaces (32, 33), facing each other, of the two plastic bodies (20, 30).

7. The composite component according to any of the preceding claims, **characterized in that** the first plastic body (20) is substantially completely covered with the coating (18) or the adhesive agent.

8. The composite component according to any of the preceding claims, **characterized in that** the coating (18) or adhesive agent is a varnish, in particular a polyurethane varnish.

9. The composite component according to any of the preceding claims, **characterized in that** the composite component (10) is a vehicle roof module (40).

10. The composite component according to claim 9, **characterized in that** in the installed condition of the vehicle roof module (40), the coating (18) forms, at least in sections, a visible outer skin of a vehicle.

11. A method of manufacturing a composite component (10) for vehicles, comprising the following steps:
a) providing molding tools (12, 14) that are movable relative to each other and are adapted to define a first mold cavity (16);
b) applying a coating (18) to a surface of the molding tools (12, 14);
c) introducing a plastic material (20') which cures in the molding tools (12, 14) to form the first plastic body (20) and produces an adhesive bond with the coating (18);
d) providing molding tools (12, 22) that are movable relative to each other and are adapted to define a second mold cavity (24) together with the first plastic body (20);
e) applying a cover (26) to a surface of at least one of the molding tools (12, 22);
f) introducing a plastic material (30') which is adjacent to the surface of the molding tool (12, 22) provided with the cover (26) and to a coated bonding surface (32) of the first plastic body (20), cures in the molding tools (12, 22) to form the second plastic body (30), and produces an adhesive bond with the coating (18) of the first plastic body (20);
g) moving the molding tools (12, 22) relative to each other until the composite component (10) can be removed, the coating (18) being a release agent which facilitates a detachment of the first plastic body (20) from the metal molding tools (12, 14, 22).

12. The method according to claim 11, **characterized in that** the plastic material (20') in step d) for forming the first plastic body (20) and/or the plastic material (30') in step h) for forming the second plastic body (30) is/are a polyurethane.

13. The method according to claim 11 or 12, **characterized in that** the coating (18) in step b) is a varnish, in particular a polyurethane varnish.

14. The method according to any of claims 11 to 13, **characterized in that** the cover (26) is a release agent which in step g) facilitates a detachment of the second plastic body (30) from the at least one metal molding tool (12, 22) provided with the cover (26).

15. The method according to any of claims 11 to 14, **characterized in that** the coating (18) is identical to the cover (26).

16. The method according to any of claims 11 to 15, **characterized in that** at least one molding tool (12) is provided which, for one thing, at least partly defines the first mold cavity (16) in step c) and, for another thing, at least partly defines the second mold cavity (24) and/or fixes the first plastic body (20) in place in step f).

17. The method according to any of claims 11 to 16, **characterized in that** before or after introducing the plastic material (20') in step c), the molding tools (12, 14) are moved relative to each other until they enclose the first mold cavity (16) which substantially corresponds to the shape of the first plastic body (20).

18. The method according to any of claims 11 to 17, **characterized in that** before or after introducing the plastic material (30') in step f), the molding tools (12, 22) are moved relative to each other until they enclose the first plastic body (20) and the second mold cavity (24) which substantially corresponds to the shape of the second plastic body (30) and is defined, at least in sections, by the surface of the molding tool (12, 22) provided with the cover (26) and a coated bonding surface (32) of the first plastic body (20).

## Revendications

1. Composant composite pour véhicules, comportant
un premier corps en matière plastique (20) qui présente une face extérieure (38) avec un revêtement (18) et une face composite (32) avec un agent adhésif, et
un deuxième corps en matière plastique (30) qui est relié au premier corps en matière plastique (20) par l'agent adhésif,
**caractérisé en ce que** le revêtement (18) côté extérieur est identique à l'agent adhésif et présente des propriétés d'agent séparateur par rapport aux métaux.

2. Composant composite selon la revendication 1, **caractérisé en ce que** le premier corps en matière plastique (20) et/ou le deuxième corps en matière plastique (30) sont fabriqués en un polyuréthane.

3. Composant composite selon l'une des revendications précédentes, **caractérisé en ce que** le premier corps en matière plastique (20) présente une épaisseur (d) sensiblement constante vue perpendiculairement à la face extérieure (38).

4. Composant composite selon l'une des revendications précédentes, **caractérisé en ce que** le deuxième corps en matière plastique (30) forme un élément support mécaniquement stable.

5. Composant composite selon l'une des revendications précédentes, **caractérisé en ce qu'**il est prévu au moins une pièce rajoutée (34) et/ou une pièce encastrée (36) qui est reçue au moins en partie dans le deuxième corps en matière plastique (30).

6. Composant composite selon l'une des revendications précédentes, **caractérisé en ce que** l'agent adhésif s'étend sensiblement sur toute la surface entre des faces composites (32, 33) des deux corps en matière plastique (20, 30) qui sont tournées l'une vers l'autre.

7. Composant composite selon l'une des revendications précédentes, **caractérisé en ce que** le premier corps en matière plastique (20) est sensiblement entièrement revêtu du revêtement (18) ou de l'agent adhésif.

8. Composant composite selon l'une des revendications précédentes, **caractérisé en ce que** le revêtement (18) ou l'agent adhésif est un vernis, en particulier un vernis polyuréthane.

9. Composant composite selon l'une des revendications précédentes, **caractérisé en ce que** le composant composite (10) est un module de toit (40) de véhicule.

10. Composant composite selon la revendication 9, **caractérisé en ce que** le revêtement (18) forme au moins par tronçons une pellicule extérieure de véhicule visible à l'état monté du module de toit (40) de véhicule.

11. Procédé de fabrication d'un composant composite (10) pour véhicules, comprenant les étapes suivantes :
a) des outils de formage (12, 14) mobiles l'un par rapport à l'autre sont fournis, lesquels peuvent définir une première cavité de formage (16),
b) un revêtement (18) est appliqué sur la surface des outils de formage (12, 14),
c) une matière plastique (20') est incorporée laquelle durcit dans les outils de formage (12, 14) de manière à former le premier corps en matière plastique (20) et réalise une liaison par adhésion avec le revêtement (18),
d) des outils de formage (12, 22) mobiles l'un par rapport à l'autre sont fournis, lesquels peuvent définir une deuxième cavité de formage (24) ensemble avec le premier corps en matière plastique (20),
e) un enrobage (26) est appliqué sur une surface d'au moins l'un des outils de formage (12, 22),
f) une matière plastique (30') qui est adjacente à la surface de l'outil de formage (12, 22) pourvu de l'enrobage (26) et à une face composite (32) revêtue du premier corps en matière plastique (20) est introduite, laquelle durcit dans les outils de formage (12, 22) de manière à former le deuxième corps en matière plastique (30) et réalise une liaison par adhésion avec le revêtement (18) du premier corps en matière plastique (20),
g) les outils de formage (12, 22) sont déplacés l'un par rapport à l'autre jusqu'à ce que le composant composite (10) puisse être extrait, le revêtement (18) étant un agent de séparation qui facilite un détachement du premier corps en matière plastique (20) hors des outils de formage métalliques (12, 14, 22).

12. Procédé selon la revendication 11, **caractérisé en ce que** la matière plastique (20') à l'étape d) pour la formation du premier corps en matière plastique (20) et/ou la matière plastique (30') à l'étape h) pour la formation du deuxième corps en matière plastique (30) est un polyuréthane.

13. Procédé selon la revendication 11 ou 12, **caractérisé en ce que** le revêtement (18) à l'étape b) est un vernis, en particulier un vernis polyuréthane.

14. Procédé selon l'une des revendications 11 à 13, **caractérisé en ce que** l'enrobage (26) est un agent de séparation qui facilite à l'étape g) un détachement du deuxième corps en matière plastique (30) dudit au moins un outil de formage métallique (12, 22) pourvu de l'enrobage (26).

15. Procédé selon l'une des revendications 11 à 14, **caractérisé en ce que** le revêtement (18) est identique à l'enrobage (26).

16. Procédé selon l'une des revendications 11 à 15, **caractérisé en ce qu'**il est prévu au moins un outil de formage (12) qui délimite d'une part à l'étape c) au moins en partie la première cavité de formage (16) et délimite d'autre part à l'étape f) au moins en partie la deuxième cavité de formage (24) et/ou fixe le premier corps en matière plastique (20).

17. Procédé selon l'une des revendications 11 à 16, **caractérisé en ce que** les outils de formage (12, 14) sont déplacés l'un par rapport à l'autre avant ou après l'introduction de la matière plastique (20') à l'étape c) jusqu'à ce qu'ils renferment la première cavité de formage (16) qui correspond sensiblement à la forme du premier corps en matière plastique (20).

18. Procédé selon l'une des revendications 11 à 17, **caractérisé en ce que** les outils de formage (12, 22) sont déplacés l'un par rapport à l'autre avant ou après l'introduction de la matière plastique (30') à l'étape f) jusqu'à ce qu'ils renferment le premier corps en matière plastique (20) et la deuxième cavité de formage (24) laquelle correspond sensiblement à la forme du deuxième corps en matière plastique (30) et est délimitée au moins par tronçons par la surface de l'outil de formage (12, 22) pourvu de l'enrobage (26) et une face composite revêtue (32) du premier corps en matière plastique (20).
